(19) **Europäisches Patentamt / European Patent Office / Office européen des brevets**

(11) **EP 1 999 079 B1**

(12) **FASCICULE DE BREVET EUROPEEN**

(45) Date de publication et mention
de la délivrance du brevet:
**30.08.2017 Bulletin 2017/35**

(51) Int Cl.:
*C03C 17/34* (2006.01)    *B32B 17/10* (2006.01)
*E06B 3/67* (2006.01)    *G02B 1/11* (2015.01)

(21) Numéro de dépôt: **07731660.2**

(22) Date de dépôt: **23.02.2007**

(86) Numéro de dépôt international:
**PCT/FR2007/050842**

(87) Numéro de publication internationale:
**WO 2007/104874 (20.09.2007 Gazette 2007/38)**

(54) **SUBSTRAT TRANSPARENT ANTIREFLET PRESENTANT UNE COULEUR NEUTRE EN REFLEXION**

TRANSPARENTES SUBSTRAT MIT ANTIREFLEXBESCHICHTUNG, DAS IN REFLEXION EINE NEUTRALE FARBE ZEIGT

ANTIREFLECTTION-COATED TRANSPARENT SUBSTRATE EXHIBITING NEUTRAL COLOUR IN REFLECTION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **10.03.2006 FR 0650811**

(43) Date de publication de la demande:
**10.12.2008 Bulletin 2008/50**

(73) Titulaire: **SAINT-GOBAIN GLASS FRANCE
92400 Courbevoie (FR)**

(72) Inventeurs:
• **REYMOND, Vincent**
**F-92160 Antony (FR)**
• **MARTIN, Estelle**
**F-93200 Saint-Denis (FR)**

(74) Mandataire: **Saint-Gobain Recherche
Département Propriété Industrielle
39 Quai Lucien Lefranc
93300 Aubervilliers (FR)**

(56) Documents cités:
**WO-A2-2004/005210    WO-A2-2005/016842
FR-A1- 2 748 743    FR-A1- 2 800 998**

## Description

L'invention concerne un substrat transparent, notamment en verre, destiné à être incorporé dans un vitrage et muni, sur au moins une de ses faces, d'un revêtement antireflet.

Un revêtement antireflet est usuellement constitué d'un empilement de couches minces interférentielles, en général une alternance de couches à base de matériau diélectrique à forts et faibles indices de réfraction. Déposé sur un substrat transparent, un tel revêtement a pour fonction d'en diminuer la réflexion lumineuse et d'en augmenter la transmission lumineuse. Un substrat ainsi revêtu voit donc son ratio lumière transmise/lumière réfléchie augmenter, ce qui améliore la visibilité des objets placés derrière lui. Lorsqu'on cherche à atteindre un effet antireflet maximal, il est alors préférable de munir les deux faces du substrat de ce type de revêtement.

Il y a beaucoup d'applications à ce type de produit : il peut servir de vitrage dans le bâtiment, ou de vitrage dans les meubles de vente, par exemple en tant que présentoir de magasin et verre bombé architectural, afin de mieux distinguer ce qui se trouve dans la vitrine, même quand l'éclairage intérieur est faible par rapport à l'éclairage extérieur. Il peut aussi servir de verre de comptoir.

Des exemples de revêtements antireflets sont décrits dans les brevets EP 0 728 712 et WO97/43224.

La plupart des revêtements antireflets mis au point à ce jour ont été optimisés pour minimiser la réflexion lumineuse à incidence normale. Il est ainsi connu qu'à incidence normale, on peut obtenir des valeurs de réflexion lumineuse $R_L$ très faibles avec des empilements à quatre couches avec une alternance couche à haut indice / couche à bas indice / couche à haut indice / couche à bas indice. Les couches à haut indice sont généralement en $TiO_2$ qui présente effectivement un indice très élevé, d'environ 2,45 et les couches à bas indice sont le plus souvent en $SiO_2$.

D'autres propriétés importantes que sont la durabilité mécanique de l'empilement et la tenue du produit aux traitements thermiques sont rarement prises en compte. De même, l'aspect optique et l'esthétique du vitrage vu de façon oblique, c'est-à-dire sous un angle d'incidence non nul, sont très peu traités dans les vitrages antireflets commercialisés à l'heure actuelle.

L'aspect en réflexion, notamment l'intensité de la réflexion lumineuse, n'est cependant pas satisfaisant dès que l'on s'éloigne un peu d'une vision perpendiculaire au vitrage. La résistance mécanique et la tenue thermomécanique de ce type d'empilements ne sont également pas satisfaisantes.

Quelques solutions ont été proposées pour prendre en compte un angle de vision oblique, mais n'ont pas donné non plus pleinement satisfaction : on peut par exemple citer le brevet EP-0 515 847 qui propose un empilement à deux couches du type $TiO_2+SiO_2/SiO_2$ ou à trois couches du type $TiO_2+SiO_2/TiO_2/SiO_2$ déposées par sol-gel, mais qui n'est pas assez performant. Cette technique de dépôt présente également l'inconvénient de produire des empilements de faible résistance mécanique.

De manière générale, les seuls revêtements antireflets actuellement proposés dont la couleur en réflexion évolue sensiblement vers le neutre lorsque l'angle d'observation augmente présentent :

- soit une réflexion lumineuse élevée sous incidence normale,
- soit des résistances mécaniques et chimiques médiocres.

La demande de brevet WO 2004/005210 décrit des empilements présentant à la fois une faible réflexion lumineuse et une bonne durabilité mais présentant une forte variation de couleur en réflexion, qui peut même aller jusqu'au rouge, lorsque l'angle d'observation varie.

La demande de brevet WO 2005/016842 décrit des empilements dont au moins l'une des couches à haut indice comprend un nitrure mixte de silicium et de zirconium, dans lequel les ions silicium sont partiellement substitués par des ions zirconium. De tels empilements présentent à la fois une faible réflexion lumineuse, une bonne durabilité et une faible variation de couleur en réflexion lorsque l'angle d'observation varie. Cependant, les essais menés par le demandeur ont montré que de tels empilements, en raison de la présence même du dopant ou substituant zirconium en relativement grande quantité, c'est-à-dire présentant typiquement un taux de substitution des cations par Zr supérieur à 5% molaire, présentent un aspect jaune marqué en transmission. Par exemple, il a été mesuré pour l'empilement de l'exemple 1 de cette demande, dans le système colorimétrique C. I .E., des valeurs $a^*_{trans}$ = -1,5 ; $b^*_{trans}$ = 4, ce qui ne permet pas une application large, par exemple dans le domaine du bâtiment.

La présente invention ne se rapporte pas à des empilements présentant un tel dopant ou substituant Zr. De préférence, lorsqu'elles ne sont pas constituées d'oxyde de zirconium $ZrO2$, lesdites couches sont exemptes de Zirconium. Au sens de la présente description, il est entendu par exempt de Zirconium que le Zr est uniquement présent dans les couches sous la forme d'impuretés inévitables.

L'invention a pour but de remédier aux inconvénients ci-dessus, en cherchant à mettre au point un revêtement antireflet, c'est-à-dire dont la réflexion lumineuse est inférieure à 2% et de préférence inférieure à 1,5%, et qui garantisse à la fois une bonne esthétique du vitrage, quelque soit l'angle d'incidence, une durabilité mécanique élevée et une bonne tenue aux traitements thermiques (recuit, trempe, bombage, pliage), et ceci sans compromettre la faisabilité économique et/ou industrielle de sa fabrication.

L'invention porte sur un empilement antireflet à au moins une séquence de quatre couches alternant couches à haut et bas indices de réfraction.

Plus précisément, l'invention a pour objet un substrat transparent, notamment verrier, comportant sur au moins une de ses faces un revêtement antireflet fait d'un empilement (A) de couches minces en matériau diélectrique d'indices de réfraction alternativement forts et faibles, notamment à effet antireflet à incidence normale, et se définissant de la façon suivante. Il comporte successivement, à partir de la surface du substrat :

- une première couche 1 à haut indice, d'indice de réfraction $n_1$ compris entre 1,8 et 2,3 et d'épaisseur géométrique $e_1$ comprise entre 10 et 25 nm,
- une seconde couche 2 à bas indice, d'indice de réfraction $n_2$ compris entre 1,40 et 1,55, d'épaisseur géométrique $e_2$ comprise entre 20 et 50 nm,
- une troisième couche 3 à haut indice, d'indice de réfraction $n_3$ compris entre 1,8 et 2,3, d'épaisseur géométrique $e_3$ comprise entre 110 et 150 nm,
- une quatrième couche 4 à bas indice, d'indice de réfraction $n_4$ compris entre 1,40 et 1,55, d'épaisseur géométrique $e_4$ comprise entre 60 et 95 nm,

la somme algébrique des épaisseurs géométriques $e_3 + e_1$ étant comprise entre 125 et 160 nm.

L'empilement (A) ne présente pas de dopant ou substituant Zr et il est présent sur au moins une des faces dudit substrat, l'autre face étant recouverte par un autre revêtement ayant un autre fonctionnalité par exemple du type antisolaire, anti-statique, couche chauffante, anti-buée, anti-pluie ou anti-salissure, ou encore recouverte d'un autre empilement (A) antireflet tel que précédemment décrit, qui peut être différent ou identique au premier.

Tous les indices de réfraction $n_1$ décrits dans la présente description sont donnés à une longueur d'onde de 550 nm.

Les recherches menées par le demandeur ont montré, comme il sera décrit par la suite, que de tels empilements sont d'une part, adaptés pour garantir une bonne esthétique du substrat et ce quel que soit l'angle d'incidence et d'autre part, aptes à subir des traitements thermiques.

Au sens de l'invention, on comprend par "couche" soit une couche unique, soit une superposition de couches où chacune d'elles respecte l'indice de réfraction indiqué et où la somme de leurs épaisseurs géométriques reste également la valeur indiquée pour la couche en question.

Les meilleurs résultats et compromis entre les différentes propriétés recherchées (telles que précédemment décrites) ont notamment été obtenus lorsqu'au moins l'une des épaisseurs géométriques et/ou l'un des indices des quatre couches de l'empilement selon l'invention ont été choisis parmi les intervalles qui suivent :

- $n_1$ et/ou $n_3$ sont inférieurs à 2,2 et avantageusement compris entre 1,85 et 2,15, notamment entre 1,90 et 2,10,
- $e_1$ est compris entre 12 et 20 nm,
- $e_2$ est compris entre 25 et 40 nm, de préférence entre 30 et 40 nm,
- $e_3$ est compris entre 115 et 135 nm,
- $e_4$ est compris entre 75 et 95 nm,
- la somme $e_3 + e_1$ est comprise entre 130 et 155 nm,

Les couches selon l'invention sont en général en matériau diélectrique, notamment du type oxyde, nitrure ou d'oxynitrure de métaux comme cela sera détaillé ultérieurement. On n'exclut cependant pas qu'au moins l'une d'entre elles soit modifiée de façon à être au moins un peu conductrice, par exemple en dopant un oxyde métallique, ceci par exemple pour conférer à l'empilement antireflet également une fonction antistatique.

L'invention concerne préférentiellement les substrats verriers, mais s'applique aussi aux substrats transparents à base de polymère, par exemple en polycarbonate.

Les critères d'épaisseur et d'indice de réfraction retenus dans l'invention permettent d'obtenir un effet antireflet à large bande de basse réflexion lumineuse, présentant une teinte neutre en transmission et une bonne esthétique en réflexion, et ce quel que soit l'angle d'incidence sous lequel on observe le substrat ainsi revêtu.

Le substrat verrier selon l'invention présente une valeur de réflexion lumineuse $R_L$ à incidence normale très basse, typiquement inférieure ou égale à 2% ou même 1,5% et une colorimétrie satisfaisante en réflexion lumineuse oblique, c'est-à-dire une couleur dont la teinte et l'intensité sont considérées comme acceptables sur le plan esthétique, ainsi qu'une couleur sensiblement neutre en transmission, et ceci sans compromettre les propriétés de durabilité mécanique et de résistance aux traitements thermiques de l'empilement.

Plus précisément :

Le substrat verrier revêtu sur ses deux faces conformément à l'invention se caractérise notamment par un abaissement d'au moins 6% de la valeur de $R_L$ dans le visible par rapport au substrat nu. Le choix de matériaux à haut indice présentant des indices plus bas que ceux classiquement utilisés, par exemple autour de 2,0, permet d'obtenir de bons antireflets qui présentent des propriétés optiques, en particulier de $R_L$ en incidence normale, comparables, bien que légèrement inférieurs, à celles obtenues avec des matériaux dont l'indice de réfraction est classiquement voisin de 2,45, en particulier $TiO_2$.

- Le présent substrat se caractérise en réflexion par des valeurs de a* et b* dans le système de colorimétrie (L, a*, b*) telles qu'une couleur le plus souvent quasiment neutre et au pire légèrement verte ou bleue sous incidence normale est obtenue (évitant l'aspect rouge ou jaune, jugé inesthétique dans de nombreuses applications, notamment dans le domaine du bâtiment). En outre, une évolution de la couleur vers le neutre absolu est observée lorsque l'angle d'observation varie, c'est-à-dire lorsque l'angle d'incidence n'est pas nul.

- La teinte du substrat en transmission est neutre, évitant un aspect jaunâtre jugé inesthétique dans de nombreuses applications, notamment dans le domaine du bâtiment.

- Les propriétés de résistance mécanique (résistance à l'abrasion, aux rayures, au nettoyage) et de résistance aux traitements thermiques (recuit, trempe, bombage) des empilements de couches du substrat transparent sont augmentées de façon significative, notamment grâce à l'utilisation de matériaux à indice plus modéré tels que $SnO_2$, $Si_3N_4$, $Sn_xZn_yO_z$, $TiZnO_x$ ou $Si_xTi_yO_z$.

En outre, toujours par rapport au $TiO_2$ jusqu'alors utilisé, ces matériaux présentent, en plus de leurs meilleures propriétés mécaniques, l'avantage d'avoir des vitesses de dépôt bien plus élevées quand on utilise la technique de dépôt dite de pulvérisation cathodique. Dans cette gamme modérée d'indices, on a également un choix plus important de matériaux pouvant être déposés par pulvérisation cathodique, ce qui offre plus de souplesse dans la fabrication industrielle et plus de possibilités pour ajouter des fonctionnalités supplémentaires à l'empilement comme cela sera détaillé ci-dessous.

Les matériaux les plus appropriés pour constituer la première et/ou la troisième couche de l'empilement, c'est-à-dire celles à plus haut indice, sont par exemple à base d'oxyde(s) métallique(s) choisi(s) dans le groupe constitué par l'oxyde de zinc (ZnO), l'oxyde d'étain ($SnO_2$), l'oxyde de zirconium ($ZrO_2$), les oxydes mixtes étain-zinc ($Sn_xZn_yO_z$), les oxydes mixtes zinc-titane ($TiZnO_x$) ou silicium-titane ($Si_xTi_yO_z$) ou à base de nitrure(s) choisi(s) dans le groupe constitué par le nitrure de silicium ($Si_3N_4$) et/ou le nitrure d'aluminium (AlN). Tous ces matériaux peuvent être éventuellement dopés pour améliorer leurs propriétés de résistance chimique et/ou mécanique et/ou électrique.

Par exemple, la troisième couche à haut indice est constitué par ou comprend un oxyde mixte d'étain/zinc ou silicium titane

Les matériaux les plus appropriés pour constituer la seconde et/ou la quatrième couche de l'empilement A, c'est à dire celles à bas indice, sont à base d'oxyde de silicium, d'oxynitrure et/ou d'oxycarbure de silicium ou encore à base d'un oxyde mixte de silicium et d'aluminium, par exemple du type $SiOAlF_x$. Un tel oxyde mixte tend à avoir une meilleure durabilité, notamment chimique, que du $SiO_2$ pur (Un exemple en est donné dans le brevet EP- 791 562). On peut ajuster la proportion respective des deux oxydes pour obtenir l'amélioration de durabilité escomptée sans trop augmenter l'indice de réfraction de la couche.

Ces empilements présentent, comme il sera décrit par la suite, une résistance à l'abrasion telle que le flou provoqué par un test TABER ne dépasse pas environ 3-4 % et une résistance aux traitements thermiques telle que le produit puisse être trempé ou bombé à des rayons de courbures inférieurs à 1 mètre et même dans certains cas à des rayons de courbure de l'ordre de 10 cm.

Ainsi, les substrats incorporant de telles couches dans leur empilement peuvent subir sans dommage, des traitements thermiques comme un recuit, une trempe, un bombage ou même un pliage. Ces traitements thermiques ne doivent pas altérer les propriétés optiques et cette fonctionnalité est importante pour les vitrages pour comptoir de magasin, car il s'agit de vitrages devant subir des traitements thermiques à haute température, du type bombage, trempe, recuit, opération de feuilletage, où les verres doivent être chauffés à au moins 120°C (feuilletage) et jusqu'à 500 à 700°C (bombage, trempe). Il devient alors décisif de pouvoir déposer les couches minces avant le traitement thermique sans que cela pose de problème (déposer des couches sur un verre bombé est délicat et coûteux, il est beaucoup plus simple sur le plan industriel de faire les dépôts avant tout traitement thermique).

Le bombage peut être avec un petit rayon de courbure (de l'ordre de 1 m), voire avec un très petit rayon de courbure (de l'ordre d'une dizaine de centimètres), typiquement pour une application relevant des vitrines, comptoirs de magasins en particulier.

Par rapport aux empilements actuellement commercialisés, l'empilement selon l'invention et tout particulièrement l'association $SiO_2/Si_3N_4$ présente l'avantage d'être stable aux traitements thermiques, de permettre des bombages pour des petits rayons de courbure (R=1 m environ); de même l'association $SiO_2$/oxydes mixtes étain-zinc ou silicium/titane garantit des bombages, voire des pliages pour de très petits rayons de courbure (R=10 cm environ). En outre, ces deux associations, qui font l'objet de la présente invention, garantissent une durabilité mécanique et chimique accrues et dans tous les cas supérieure à celles obtenues avec un empilement comportant du $TiO_2$. En effet, aucun empilement de l'art antérieur ne permettait d'obtenir à la fois une couleur en réflexion jugée esthétique à tout angle d'incidence, des propriétés de durabilité mécanique et chimique élevées et une aptitude à subir des bombages et/ou des pliages sans présenter des défauts optiques majeurs.

On peut ainsi avoir une seule configuration d'empilement antireflet que le verre porteur soit ou non destiné à subir un traitement thermique. Même s'il n'est pas destiné à être chauffé, il reste intéressant d'utiliser au moins une couche en nitrure, car elle améliore la durabilité mécanique et chimique de l'empilement dans son ensemble.

Selon un mode de réalisation particulier, la première et/ou la troisième couche, celles à haut indice, peuvent en fait être constituées de plusieurs couches à haut indice superposées. Il peut tout particulièrement s'agir d'un bicouche du type $SnO_2/Si_3N_4$ ou $Si_3N_4/SnO_2$. L'avantage en est le suivant : le $Si_3N_4$ tend à se déposer un peu moins facilement, un peu plus lentement qu'un oxyde métallique classique comme $SnO_2$, ZnO ou $ZrO_2$ par pulvérisation cathodique réactive. Pour la troisième couche notamment, qui est la plus épaisse et la plus importante pour protéger l'empilement des détériorations éventuelles résultant d'un traitement thermique, il peut être intéressant de dédoubler la couche de façon à mettre juste l'épaisseur suffisante de $Si_3N_4$ pour obtenir l'effet de protection vis-à-vis des traitements thermiques voulus, et à "compléter" optiquement la couche par du $SnO_2$ ou du ZnO.

Le verre choisi pour le substrat revêtu de l'empilement A selon l'invention ou pour les autres substrats qui lui sont associés pour former un vitrage, peut être particulier, par exemple extra-clair du type "Diamant", ou clair du type "Planilux" ou teinté dans la masse du type "Parsol", trois produits commercialisés par Saint-Gobain Vitrage, ou encore être de type "TSA" ou "TSA ++" comme décrit dans le brevet EP 616 883. Il peut aussi s'agir de verres éventuellement teintés comme décrit dans les brevets WO 94/14716; WO 96/00194, EP 0 644 164 ou WO 96/28394. Il peut être filtrant vis-à-vis de rayonnements du type ultraviolet.

L'invention a également pour objet les vitrages incorporant les substrats munis de l'empilement de couches définies plus haut. Le vitrage en question peut être "monolithique", c'est-à-dire composé d'un seul substrat revêtu de l'empilement de couches sur une de ses faces. Sa face opposée peut être dépourvue de tout revêtement antireflet, en étant recouverte d'un autre revêtement ayant une autre fonctionnalité. Il peut s'agir d'un revêtement à fonction anti-solaire (utilisant par exemple une ou plusieurs couches d'argent entourées de couches en matériau diélectrique, comme des oxydes ou des nitrures métalliques, ou en alliages mlétalliques comme Ni-Cr), à fonction bas-émissive (par exemple en oxyde de métal dopé comme SnO2:F ou oxyde d'indium dopé à l'étain ITO ou une ou plusieurs couches d'argent), à fonction anti-statique (oxyde métallique dopé ou sous stoechiométrique en oxygène), couche chauffante (oxyde métallique dopé, Cu, Ag par exemple) ou réseau de fils chauffants (fils de cuivre ou bandes sérigraphiées à partir de pâte à l'argent conductrice), anti-buée (à l'aide d'une couche hydrophile), anti-pluie (à l'aide d'une couche hydrophobe, par exemple à base de polymère fluoré), anti-salissures (revêtement photocatalytique comprenant du TiO2 au moins partiellement cristallisé sous forme anatase).

Ladite face opposée peut aussi être munie d'un empilement antireflet, pour maximiser l'effet antireflet recherché. Dans ce cas, il s'agit également d'un empilement antireflet répondant aux critères de la présente invention qui peut être soit identique, soit différent du premier empilement.

Le substrat selon l'invention peut être muni sur ses deux faces dudit empilement de couches antireflet.

Un autre vitrage intéressant incorporant un substrat revêtu selon l'invention a une structure feuilletée, qui associe deux substrats verriers à l'aide d'une ou plusieurs feuilles en matériau thermoplastique comme le polyvinylbutyral PVB. Dans ce cas, l'un des deux substrats est muni, en face externe (opposée à l'assemblage du verre avec la feuille thermoplastique), de l'empilement antireflet selon l'invention. L'autre verre, en face externe également, pouvant comme précédemment, être revêtu du même d'empilement antireflet ou d'un autre type (B) d'empilement antireflet, ou encore d'un revêtement ayant une autre fonctionnalité comme dans le cas précédent (cet autre revêtement peut aussi être disposé non pas sur une face opposée à l'assemblage, mais sur une des faces de l'un des substrats rigides qui se trouve tournée du côté de la feuille thermoplastique d'assemblage). On peut ainsi munir le vitrage feuilleté d'un réseau de fils chauffants, d'une couche chauffante ou d'un revêtement anti-solaire à l'"intérieur" du feuilleté.

L'invention comprend aussi les vitrages munis de l'empilement antireflet de l'invention et qui sont des vitrages multiples, c'est-à-dire utilisant au moins deux substrats séparés par une lame de gaz intermédiaire (double ou triple vitrage). Là encore, les autres faces du vitrage peuvent être également traitées antireflet ou présenter une autre fonctionnalité. Le vitrage multiple, notamment double ou à structure feuilletée, comporte au moins deux substrats, tels que précédemment décrit. Les deux substrats verriers sont séparés par une lame de gaz intermédiaire ou associés à l'aide d'une feuille en matériau thermoplastique. L'un desdits substrats est muni sur sa face externe, c'est-à-dire sur la face tournée à l'opposé de la feuille thermoplastique ou de la lame de gaz, de l'empilement antireflet selon l'invention. L'autre substrat sur sa face externe est revêtu d'un empilement antireflet de même nature ou différent, ou est revêtu d'un revêtement ayant une autre fonctionnalité du type anti-solaire, bas-émissif, anti-salissures, anti-buée, anti-pluie, chauffant, et/ou ledit revêtement ayant une autre fonctionnalité est disposé sur l'une des faces des substrats tournées vers la feuille thermoplastique d'assemblage ou vers la lame de gaz.

A noter que cette autre fonctionnalité peut aussi consister à disposer sur une même face l'empilement antireflet et l'empilement ayant une autre fonctionnalité (par exemple en surmontant l'antireflet d'une très fine couche de revêtement anti-salissures), l'ajout de cette fonctionnalité supplémentaire ne se faisant pas bien entendu au détriment des propriétés optiques.

Un procédé de fabrication des substrats verriers à revêtement antireflet selon l'invention consiste typiquement à déposer l'ensemble des couches, successivement les unes après les autres, par une technique sous vide, notamment par pulvérisation cathodique assistée par champ magnétique ou par décharge couronne. Ainsi, on peut déposer les couches d'oxyde par pulvérisation réactive du métal en question en présence d'oxygène et les couches en nitrure en présence d'azote. Pour faire du $SiO_2$ ou du $Si_3N_4$, on peut partir d'une cible en silicium que l'on dope légèrement avec un métal comme l'aluminium pour la rendre suffisamment conductrice. Typiquement, les couches sont déposées de façon conventionnelle par pulvérisation cathodique assistée par champ magnétique et réactive, en atmosphère oxydante à partir de cible de Si ou de métal pour faire des couches en $SiO_2$ ou en oxyde métallique, à partir de cible de Si ou de métal en atmosphère nitrurante pour faire des nitrures, et dans une atmosphère mixte oxydante/nitrurante pour faire les oxynitrures. Les cibles en Si peuvent contenir un autre métal en faible quantité, notamment Zr, Al, notamment afin de les rendre plus conductrices.

L'invention a également pour objet les applications de ces vitrages, dont la plupart ont déjà été évoquées : vitrine, présentoir, comptoir de magasin, vitrages intérieurs ou extérieurs pour le bâtiment, pour tout dispositif d'affichage comme les écrans anti-éblouissement d'ordinateur, la télévision, tout mobilier verrier, tout verre décoratif, les toits pour automobile. Ces vitrages peuvent être bombés/trempés après dépôt des couches.

Les détails et caractéristiques avantageuses de l'invention vont maintenant ressortir des exemples suivants non limitatifs, illustrés à l'aide des figures suivantes :

La figure 1 est un substrat muni sur une de ses deux faces d'un empilement antireflet à quatre couches A selon l'invention,
La figure 2 est un substrat muni sur chacune de ses faces I, II d'un empilement antireflet à quatre couches A et B selon l'invention,

**Exemples :**

On a synthétisé différents empilements antireflets à quatre couches sur un substrat verrier selon le procédé suivant :

Les couches ont été déposées successivement les unes après les autres par pulvérisation cathodique assistée par champ magnétique. Les couches de $SiO_2$ et de $Si_3N_4$ sont obtenues par pulvérisation réactive d'une cible de silicium légèrement dopé avec de l'aluminium métallique pour la rendre suffisamment conductrice, en présence d'oxygène pour les couches de $SiO_2$ et en présence d'azote pour les couches de $Si_3N_4$.

L'empilement des couches est le suivant, en partant du substrat verrier 6, pour tous les exemples :

| | | |
|---|---|---|
| couche 1 : | $Si_3N_4$ | indice $n_1 = 2{,}0$ |
| couche 2 : | $SiO_2$ | indice $n_2 = 1{,}48$ |
| couche 3 : | $Si_3N_4$ | indice $n_3 = 2{,}0$ |
| couche 4 : | $SiO_2$ | indice $n_4 = 1{,}48$ |

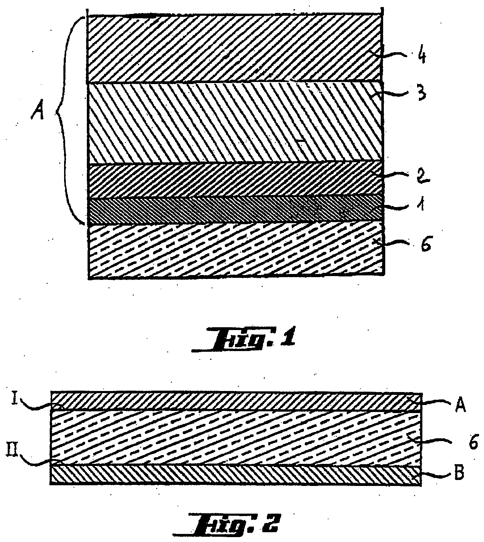

Le verre est un verre clair silico-sodo-calcique de 4 mm d'épaisseur, commercialisé sous le nom de Planilux® par Saint-Gobain Vitrage. Ce verre constitue un vitrage monolithique et est muni sur ses deux faces de l'empilement antireflet précédemment décrit, selon le schéma synoptique de la figure 2.

Le tableau 1 ci-dessous donne les épaisseurs géométriques $e_i$, en nanomètres, de chacune des couches i, pour les différents empilements :

Tableau 1

| Empilement | e1 (nm) | e2 (nm) | e3 (nm) | e4 (nm) | e3+e1 (nm) |
|---|---|---|---|---|---|
| 1 | 15 | 32 | 121 | 87 | 136 |
| 2 | 16 | 37 | 135 | 85 | 151 |
| 3 | 14 | 35 | 130 | 75 | 144 |

(suite)

| Empilement | e1 (nm) | e2 (nm) | e3 (nm) | e4 (nm) | e3+e1 (nm) |
|---|---|---|---|---|---|
| 4 | 13 | 25 | 118 | 90 | 131 |
| 5 | 18 | 28 | 102 | 90 | 120 |
| 6 | 19 | 29 | 150 | 95 | 169 |

Les empilements de couches numérotés 1 à 4 sont conformes à la présente invention. L'empilement n° 5 est identique à l'empilement décrit dans l'exemple 2 de la demande de brevet WO 04/005210. L'empilement n°6 n'est pas conforme à l'invention et est donné à titre uniquement comparatif.

Les différents substrats ainsi recouverts ont ensuite été évalués en réflexion lumineuse à incidence normale et oblique. Les résultats obtenus sont donnés dans les exemples 1 à 6 ci-après :

**Exemple 1 :**

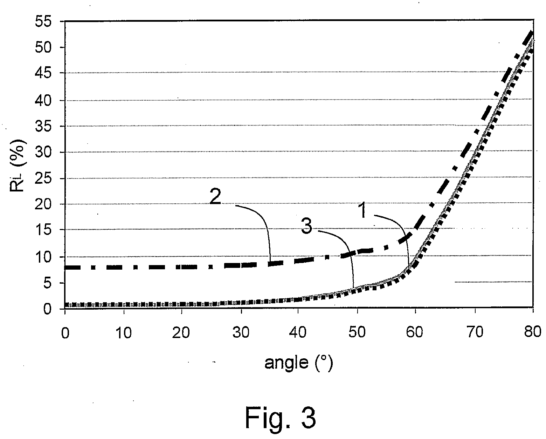

On a mesuré les coordonnées colorimétriques de l'empilement n°1 précédant selon le système C. I. E. L'empilement se révèle particulièrement adapté pour une application relevant du bâtiment, pour laquelle une couleur en transmission neutre (voisine du gris) est recherchée, la réflexion lumineuse à incidence normale est proche de 1% et les valeurs de $a^*$, $b^*$ sont respectivement 2 et -14, donnant une couleur en réflexion à 0° d'incidence légèrement bleutée. L'empilement présente en outre l'avantage d'offrir une très faible variation de la couleur en réflexion suivant l'angle d'incidence, ladite variation évoluant de plus avec l'angle vers une couleur très neutre, comme le montre le tableau 2. La figure 3 illustre l'évolution de la réflexion lumineuse en fonction de l'ange d'observation pour la substrat doté de cet empilement (courbe 1), pour le substrat sans empilement (courbe 2) et pour le verre antireflet actuellement commercialisé par la société Saint-Gobain Glass France sous la référence Vision-Lite Plus® (courbe 3). On voit sur la figure 3 que les propriétés optiques en $R_L$ du substrat verrier comportant l'empilement selon l'invention sont sensiblement équivalentes à celles d'un antireflet actuellement commercialisé.

Tableau 2

| Incidence | $R_L(\%)$ | $a^*$ | $b^*$ | Couleur |
|---|---|---|---|---|
| 0° | 1,1 | 2 | -14 | Légèrement bleu |
| 20° | 1,1 | 1 | -11 | Légèrement bleu |
| 30° | 1,2 | 0 | -8 | Neutre |
| 40° | 1,7 | 0 | -3 | Neutre |
| 50° | 3,4 | 0 | 0 | Neutre |
| 60° | 8,3 | 0 | 0 | Neutre |
| 80° | 50,0 | 0 | 0 | Neutre |

En outre, la couleur en transmission du vitrage est neutre ($a^*_{trans}$ = -1,5, $b^*_{trans}$ = 1,5).

**Exemple 2 :**

On a mesuré les coordonnées colorimétriques de l'empilement n°2 du tableau 1 selon le système C. I. E. La réflexion lumineuse sous incidence normale est cette fois voisine de 1,5 %, ce qui permet une application relevant du bâtiment. Les valeurs de $a^*$,$b^*$ en réflexion sous incidence normale sont respectivement -1 et -4, conduisant à une couleur en réflexion à incidence normale quasiment neutre, qui tend vers un neutre absolu lorsque l'angle d'observation augmente, comme le montre le tableau 3 ci-dessous:

Tableau 3

| Incidence | $R_L(\%)$ | $a^*$ | $b^*$ | Couleur |
|---|---|---|---|---|
| 0° | 1,5 | -1 | -4 | Neutre |
| 20° | 1,5 | 0 | -4 | Neutre |

(suite)

| Incidence | $R_L$(%) | a* | b* | Couleur |
|---|---|---|---|---|
| 30° | 1,7 | 1 | -2 | Neutre |
| 40° | 2,4 | 0 | 0 | Neutre |
| 50° | 4,4 | -1 | 1 | Neutre |
| 60° | 9,5 | -1 | 1 | Neutre |
| 80° | 50,8 | 0 | 0 | Neutre |

La couleur en transmission du vitrage est neutre ($a^*_{trans}$ = -1,3, $b^*_{trans}$ = 0,8).

### Exemple 3 :

On a mesuré les coordonnées colorimétriques de l'empilement n°3 de l'exemple 1 selon le système C. I. E. La réflexion lumineuse sous incidence normale est voisine de 2.0 %. Les valeurs de a*,b* en réflexion sous incidence normale sont respectivement -2 et 0, conduisant à une couleur en réflexion extrêmement neutre, qui de plus n'évolue pratiquement pas lorsque l'angle d'observation augmente, comme le montre le tableau 4 :

Tableau 4

| Incidence | $R_L$(%) | a* | b* | Couleur |
|---|---|---|---|---|
| 0° | 2,0 | -2 | 0 | Neutre |
| 20° | 2,2 | -2 | 0 | Neutre |
| 30° | 2,5 | -2 | 1 | Neutre |
| 40° | 3,3 | -1 | 1 | Neutre |
| 50° | 5,3 | 0 | 0 | Neutre |
| 60° | 10,5 | 1 | 0 | Neutre |
| 80° | 51,5 | 0 | 0 | Neutre |

La couleur en transmission du vitrage est neutre ($a^*_{trans}$ = -1,3, $b^*_{trans}$ = 0,8).

### Exemple 4 :

On a mesuré les coordonnées colorimétriques de l'empilement n°4 selon le système C. I. E. La réflexion lumineuse sous incidence normale est voisine de 1,7 %. Les valeurs de a*,b* en réflexion sous incidence normale sont respectivement -10 et -3, conduisant à une couleur légèrement verte en réflexion, et qui devient neutre pour un angle supérieur à 40°, comme le montre le tableau 5 :

Tableau 5

| Incidence | $R_L$(%) | a* | b* | Couleur |
|---|---|---|---|---|
| 0° | 1,7 | -10 | -3 | Vert |
| 20° | 1,6 | -12 | -2 | Vert |
| 30° | 1,6 | -13 | -2 | Vert |
| 40° | 1,9 | -10 | -3 | Vert |
| 50° | 3,3 | -4 | -4 | Neutre |
| 60° | 7,7 | 0 | -4 | Neutre |
| 80° | 49,3 | 0 | -1 | Neutre |

La couleur en transmission du vitrage est neutre (a*$_{trans}$ = -1,3, b*$_{trans}$ = 0,7).

**Exemple 5 :**

Les coordonnées colorimétriques selon le système C. I. E. de l'empilement n°5 décrit précédemment sont ceux décrits dans la demande de brevet antérieur WO 04/005210. On observe que, si la réflexion lumineuse en incidence normale est légèrement inférieure à celle des précédents exemples, les valeurs de a* et b* répertoriés dans le tableau 6 donnent au vitrage une couleur d'un bleu-violet prononcé, et ce quelque soit l'angle d'incidence.

Tableau 6

| Incidence | R$_L$ | a* | b* | Couleur |
|---|---|---|---|---|
| 0° | < 1 % | 13 | -31 | Bleu |
| 20° | < 1 % | 15 | -30 | Bleu |
| 40° | < 1 % | 14 | -19 | Violet |

**Exemple 6 :**

On a mesuré les coordonnées colorimétriques de l'empilement n°6 précédent selon le système C. I. E. Les valeurs de a* et b* répertoriés dans le tableau 7 indiquent que la couleur en réflexion d'un tel vitrage est très variable en fonction de l'angle d'incidence, évoluant du violet vers le rouge puis vers le jaune lorsque l'angle d'incidence augmente. De telles caractéristiques empêchent l'utilisation d'un tel vitrage par exemple dans le domaine du bâtiment.

Tableau 7

| Incidence | R$_L$(%) | a* | b* | Couleur |
|---|---|---|---|---|
| 0° | 1,2 | 15 | -10 | Violet |
| 20° | 1.3 | 15 | -5 | Rose |
| 30° | 1,7 | 12 | 2 | Rouge |
| 40° | 2,7 | 7 | 9 | Orange |
| 50° | 5,0 | 1 | 13 | Jaune |
| 60° | 10,3 | -3 | 10 | Jaune |
| 80° | 51,3 | -2 | 2 | Neutre |

**Exemple 7 :**

On a fait subir au substrat muni de l'empilement n°1 de l'exemple 1 un traitement thermique consistant en une chauffe jusqu'à une température de 640°C suivie d'une trempe. Le tableau 8 permet la comparaison directe des propriétés optiques du vitrage avant et après le traitement thermique :

Tableau 8

| Incidence | R$_L$(%) | | a* | | b* | |
|---|---|---|---|---|---|---|
| | avant | après | avant | après | avant | après |
| 0° | 1,1 | 1,0 | 2 | 2 | -14 | -16 |
| 20° | 1,1 | 0,9 | 1 | 1 | -11 | -14 |
| 30° | 1,2 | 1,0 | 0 | 2 | -8 | -11 |
| 40° | 1,7 | 1,5 | 0 | 2 | -3 | -6 |
| 50° | 3,4 | 3,2 | 0 | 2 | 0 | -3 |
| 60° | 8,3 | 8,2 | 0 | 1 | 0 | -1 |

(suite)

| Incidence | $R_L(\%)$ | | a* | | b* | |
|---|---|---|---|---|---|---|
| | avant | après | avant | après | avant | après |
| 80° | 50,0 | 49,9 | 0 | 0 | 0 | 0 |

Dans le système colorimétrique L*, a*, b* et sous incidence normale, la variation de couleur liée au traitement thermique, a été quantifiée en utilisant la grandeur ΔE classiquement utilisée et définie par la relation:

$$\Delta E = \sqrt{(\Delta a^*)^2 + (\Delta b^*)^2 + (\Delta L^*)^2}$$

Dans cet exemple, la grandeur ΔE est inférieure à 3, ce qui prouve que le substrat revêtu d'un tel empilement peut subir un traitement thermique suivi d'une trempe sans que ses propriétés optiques soient sensiblement modifiées. Des résultats similaires ont été obtenus pour les autres empilements 2 à 4 selon l'invention.

**Exemple 8 :**

La résistance mécanique des empilements selon l'invention a été mesurée par des tests TABER de résistance à l'abrasion et à la rayure.
On rappelle ci-après le principe de fonctionnement d'un appareil permettant de réaliser un test TABER.
Sur un échantillon positionné horizontalement sur un plateau tournant reposent 2 meules abrasives tarées à 250 g. Une charge d'appui supérieure (jusqu'à un total de 1 kg) peut être ajustée en fonction du test. Lors de la rotation de l'échantillon, les meules tournent en sens inverse sur une couronne de $30cm^2$, et ceci 2 fois au cours de chaque rotation.
Le test de résistance à l'abrasion comprend trois étapes :

- une étape de nettoyage des meules
- l'abrasion de l'échantillon proprement dit
- une mesure de flou provoqué par cette abrasion

En ce qui concerne l'étape de nettoyage, elle consiste à positionner à la place de l'échantillon séquentiellement

- un abrasif (25 tours)
- un verre « float » nu (100 tours)

L'étape d'abrasion est réalisée sur un échantillon 10 cm x 10 cm La mesure de flou est réalisée à l'aide d'un turbidimètre BYK Gardner XL-211. Avec cet appareil on mesure le flou sur l'empreinte laissée par la meule du test TABER lors de l'abrasion par une grandeur ΔH obtenu de la manière suivante :

ΔH = (Transmission totale de l'échantillon / Transmission diffusée par l'échantillon) x 100.

Pour l'application visée dans la présente demande, on utilise les conditions opératoires suivantes : Meule CS 10 F, Charge 500 g, 650 tours. Pour les empilements faisant l'objet des exemples 1 à 4, le ΔH mesuré après le test TABER est toujours inférieur à 3 %. Les mêmes empilements ayant subi une trempe, telle que décrite à l'exemple 7, présentent également un ΔH toujours inférieur à 3 %, mesuré après le même test TABER et donc également une même très bonne résistance mécanique.

**Exemple 9 :**

On a synthétisé un empilement antireflet n°7 à quatre couches sur les deux faces du même substrat verrier Planilux®, selon le même procédé que précédemment exposé. L'empilement des couches est le suivant, en partant du substrat verrier:

couche 1 : $SnZn_2O_4$ indice $n_1$ = 2,05
couche 2 : $SiO_2$ indice $n_2$ = 1,48
couche 3 : $SnZn_2O_4$ indice $n_3$ = 2,05
couche 4 : $SiO_2$ indice $n_4$ = 1,48

Le tableau 9 ci-dessous donne les épaisseurs géométriques $e_i$, en nanomètres, de chacune des couches i constituant l'empilement n°7 :

Tableau 9

| Empilement | e1 (nm) | e2 (nm) | e3 (nm) | e4 (nm) | e3+e1 (nm) |
|---|---|---|---|---|---|
| 7 | 14 | 35 | 124 | 87 | 138 |

Des essais de bombage effectués sur le substrat muni de l'empilement 7, à base de $SnZn_2O_4$ et de $SiO_2$ ont montré que l'empilement peut subir des traitements thermiques et qu'en particulier, il est trempable et bombable. Il n'apparaît pas de défaut optique pour des rayons de courbure de l'ordre de 1 m. Le flou mesuré après bombage selon la méthode précédemment décrire, dans la zone de plus forte courbure, est inférieur à $\Delta H$ = 6%.

**Exemple 10 (comparatif):**

Dans cet exemple, on a évalué les qualités otiques de empilement antireflet décrit dans l'exemple 1 de la demande de brevet FR 2748743.

Le substrat comporte sur l'une de ses faces un empilement comprenant les couches successives présentant des indices et des épaisseurs géométriques similaires à celles de l'empilement n°1 décrit précédemment. L'autre face est recouverte d'un empilement à trois couches très différent des empilements selon l'invention.

Selon cet exemple, l'empilement des couches sur le substrat est le suivant :

| Succession couches | SiOAlF | / $TiO_2$ / | $SiO_xC_y$ | / Verre / | $SnO_2$ / | $SiO_2$ / | $Nb_2O_5$ / | $SiO_2$ |
|---|---|---|---|---|---|---|---|---|
| Indice | 1,48 | 2,45 | 1,73 | | 1,9 | 1,45 | 2,1 | 1,45 |
| Epaisseur géométrique (nm) | 90 | 99 | 71 | | 18 | 35 | 120 | 85 |

On a mesuré les coordonnées colorimétriques de ce vitrage selon l'art antérieur en utilisant le système C. I. E. Les valeurs de a* et b* répertoriées dans le tableau 10 indiquent que la couleur en réflexion d'un tel vitrage est très variable en fonction de l'angle d'incidence, évoluant du bleu vers le rouge puis vers le jaune lorsque l'angle d'incidence augmente.

Tableau 10

| Incidence | $R_L$(%) | a* | b* | Couleur |
|---|---|---|---|---|
| 0° | 0,8 | 3 | -18 | bleu |
| 20° | 0,7 | 5 | -17 | bleu-violet |
| 30° | 0,7 | 6 | -15 | bleu-violet |
| 40° | 1,0 | 8 | -10 | violet |
| 50° | 2,6 | 6 | -3 | rouge |
| 60° | 7,4 | 3 | 1 | rouge |
| 80° | 49,4 | 0 | 3 | jaune |

**Revendications**

1.  Substrat transparent (6), notamment verrier, comportant un revêtement antireflet fait d'un empilement (A) de couches minces en matériau diélectrique d'indices de réfraction alternativement forts et faibles, **caractérisé en ce que** l'empilement comporte successivement, à partir de la surface du substrat :

- une première couche (1) à haut indice, d'indice de réfraction $n_1$ compris entre 1,8 et 2,3 et d'épaisseur géométrique $e_1$ comprise entre 10 et 25 nm,
- une seconde couche (2) à bas indice, d'indice de réfraction $n_2$ compris entre 1,40 et 1,55 et d'épaisseur géométrique $e_2$ comprise entre 20 et 50 nm,
- une troisième couche (3) à haut indice, d'indice de réfraction $n_3$ compris entre 1,8 et 2,3 et d'épaisseur géométrique $e_3$ comprise entre 110 et 150 nm,
- une quatrième couche (4) à bas indice, d'indice de réfraction $n_4$ compris entre 1,40 et 1,55 et d'épaisseur géométrique $e_4$ comprise entre 60 et 95 nm,

la somme algébrique des épaisseurs géométriques $e_3 + e_1$ étant comprise entre 125 et 160 nm, **en ce que** ledit empilement (A) ne présente pas de dopant Zr et **en ce que** ledit empilement est présent sur au moins une des faces dudit substrat, l'autre face étant recouverte par un autre revêtement ayant un autre fonctionnalité par exemple du type antisolaire, anti-statique, couche chauffante, anti-buée, anti-pluie au anti-salissure, ou encore recouverte d'un autre empilement (A) antireflet tel que précédemment décrit.

2. Substrat selon la revendication 1, dans lequel $n_1$ et $n_3$ sont inférieurs à 2,2 et de préférence compris entre 1,85 et 2,15, voire entre 1,90 et 2,10.

3. Substrat selon l'une des revendications précédentes, dans lequel $e_1$ est compris entre 12 et 20 nm.

4. Substrat selon l'une des revendications précédentes, dans lequel $e_2$ est compris entre 25 et 40 nm, de préférence entre 30 et 40 nm.

5. Substrat selon l'une des revendications précédentes, dans lequel $e_3$ est compris entre 115 et 135 nm.

6. Substrat selon l'une des revendications précédentes, dans lequel $e_4$ est compris entre 75 et 95 nm.

7. Substrat selon l'une des revendications précédentes, dans lequel la somme algébrique des épaisseurs géométriques $e_3 + e_1$ est comprise entre 130 et 155 nm.

8. Substrat selon l'une des revendications précédentes, dans lequel la première couche à haut indice (1) et/ou la troisième couche à haut indice (3) sont à base d'oxyde(s) métallique(s) choisi(s) parmi l'oxyde de zinc, l'oxyde d'étain, l'oxyde de zirconium ou à base de nitrure(s) choisi(s) parmi le nitrure de silicium et/ou le nitrure d'aluminium ou à base d'oxydes mixtes étain/zinc ($Sn_xZn_yO_z$), ou d'oxydes mixtes zinc-titane ($TiZnO_x$), ou à base d'oxyde mixte silicium/titane ($Si_xTi_yO_z$).

9. Substrat selon l'une des revendications précédentes, dans lequel la première couche à haut indice (1) et/ou la troisième couche (3) à haut indice sont constituées d'une superposition de plusieurs couches à haut indice, notamment d'une superposition de deux couches comme $SnO_2/Si_3N_4$ ou $Si_3N_4/SnO_2$.

10. Substrat selon l'une des revendications précédentes, dans lequel la seconde couche à bas indice (2) et/ou la quatrième couche à bas indice (4) sont à base d'oxyde de silicium, d'oxynitrure et/ou oxycarbure de silicium ou d'un oxyde mixte de silicium et d'aluminium, par exemple du type $SiOAlF_x$.

11. Substrat selon l'une des revendications précédentes, dans lequel ledit substrat est en verre, clair ou teinté dans la masse.

12. Substrat selon l'une des revendications précédentes, dans lequel la troisième couche à haut indice est constitué par ou comprend un oxyde mixte d'étain/zinc ou silicium titane.

13. Substrat selon l'une des revendications précédentes, dans lequel la troisième couche à haut indice est constitué par ou comprend un nitrure de silicium.

14. Substrat selon l'une quelconque des revendications précédentes, muni sur ses deux faces dudit empilement de couches antireflet.

15. Substrat selon l'une quelconque des revendications précédentes, muni sur l'une des ses faces dudit empilement de couches antireflet et muni sur l'autre face d'un revêtement ayant une autre fonctionnalité du type anti-solaire, bas-émissif, anti-salissures, anti-buée, anti-pluie, chauffant.

16. Vitrage multiple, notamment double ou à structure feuilletée, comportant au moins deux substrats selon l'une quelconque des revendications précédentes, dans lequel les deux substrats verriers sont séparés par une lame de gaz intermédiaire ou associés à l'aide d'une feuille en matériau thermoplastique, dans lequel l'un desdits substrats est muni sur sa face externe, c'est-à-dire sur la face tournée à l'opposé de la feuille thermoplastique ou de la lame de gaz, dudit empilement antireflet, et dans lequel l'autre substrat sur sa face externe est revêtu d'un empilement antireflet de même nature ou différent, ou est revêtu d'un revêtement ayant une autre fonctionnalité du type anti-solaire, bas-émissif, anti-salissures, anti-buée, anti-pluie, chauffant, et/ou dans lequel ledit revêtement ayant une autre fonctionnalité est disposé sur l'une des faces des substrats tournées vers la feuille thermoplastique d'assemblage ou vers la lame de gaz.

17. Application du substrat selon l'une des revendications 1 à 15 ou du vitrage multiple selon la revendication 16 en tant que vitrage intérieur ou extérieur pour le bâtiment, en tant que présentoir, comptoir de magasin, notamment sous forme de verre bombé, en tant qu'écran anti-éblouissement d'ordinateur ou en tant que mobilier verrier.

**Patentansprüche**

1. Transparentes Substrat (6), insbesondere Glassubstrat, umfassend eine Antireflex-Beschichtung, hergestellt aus einer Stapelung (A) von dünnen Schichten aus dielektrischem Material mit alternativ hohen und niedrigen Brechungsindizes, **dadurch gekennzeichnet, dass** die Stapelung aufeinander folgend, ab der Oberfläche des Substrats, Folgendes umfasst:

   - eine erste Schicht (1) mit hohem Index, mit einem Brechungsindex $n_1$ im Bereich zwischen 1,8 und 2,3 und einer geometrischen Dicke $e_1$ im Bereich zwischen 10 und 25 nm,
   - eine zweite Schicht (2) mit niedrigem Index, mit einem Brechungsindex $n_2$ im Bereich zwischen 1,40 und 1,55 und einer geometrischen Dicke $e_2$ im Bereich zwischen 20 und 50 nm,
   - eine dritte Schicht (3) mit hohem Index, mit einem Brechungsindex $n_3$ im Bereich zwischen 1,8 und 2,3 und einer geometrischen Dicke $e_3$ im Bereich zwischen 110 und 150 nm,
   - eine vierte Schicht (4) mit niedrigem Index, mit einem Brechungsindex $n_4$ im Bereich zwischen 1,40 und 1,55 und einer geometrischen Dicke $e_4$ im Bereich zwischen 60 und 95 nm,

   wobei die algebraische Summe der geometrischen Dicken $e_3 + e_1$ im Bereich zwischen 125 und 160 nm liegt, dadurch, dass die Stapelung (A) keinen Zusatz Zr aufweist, und dadurch, dass die Stapelung auf mindestens einer der Seiten des Substrats vorhanden ist, wobei die andere Seite durch eine andere Beschichtung bedeckt ist, die eine andere Funktion hat, z. B. vom Typ Sonnenschutz, Antistatik, Heizschicht, Antibeschlag, Regenschutz oder Schmutzschutz, oder auch bedeckt mit einer weiteren Antireflex-Stapelung (A) wie oben beschrieben.

2. Substrat nach Anspruch 1, wobei $n_1$ und $n_3$ niedriger als 2,2 sind und vorzugsweise im Bereich zwischen 1,85 und 2,15, sogar zwischen 1,90 und 2,10 liegen.

3. Substrat nach einem der vorhergehenden Ansprüche, wobei $e_1$ im Bereich zwischen 12 und 20 nm liegt.

4. Substrat nach einem der vorhergehenden Ansprüche, wobei $e_2$ im Bereich zwischen 25 und 40 nm liegt, vorzugsweise zwischen 30 und 40 nm

5. Substrat nach einem der vorhergehenden Ansprüche, wobei $e_3$ im Bereich zwischen 115 und 135 nm liegt.

6. Substrat nach einem der vorhergehenden Ansprüche, wobei $e_4$ im Bereich zwischen 75 und 95 nm liegt.

7. Substrat nach einem der vorhergehenden Ansprüche, wobei die algebraische Summe der geometrischen Dicken $e_3 + e_1$ im Bereich zwischen 130 und 155 nm liegt.

8. Substrat nach einem der vorhergehenden Ansprüche, wobei die erste Schicht mit hohem Index (1) und/oder die dritte Schicht mit hohem Index (3) auf Metalloxid(en) basieren, ausgewählt aus Zinkoxid, Zinnoxid Zirkoniumoxid oder basierend auf Nitrid(en), ausgewählt aus Siliciumnitrid und/oder Aluminiumnitrid oder basierend auf gemischten Zinn-/Zinkoxiden ($Sn_xZn_yO_z$), oder gemischten Zink-/Titanoxiden ($TiZnO_x$), oder basierend auf gemischem Silizium-/Titanoxid ($Si_xTi_yO_z$).

**9.** Substrat nach einem der vorhergehenden Ansprüche, wobei die erste Schicht mit hohem Index (1) und/oder die dritte Schicht (3) mit hohem Index aus einer Überlagerung von mehreren Schichten mit hohem Index bestehen, insbesondere einer Überlagerung von zwei Schichten wie z. B. $SnO_2/Si_3N_4$ oder $Si_3N_4/SnO_2$.

**10.** Substrat nach einem der vorhergehenden Ansprüche, wobei die zweite Schicht mit niedrigem Index (2) und/oder die vierte Schicht mit niedrigem Index (4) auf Siliciumoxid, Oxynitid und/oder Siliciumoxycarbid oder einem gemischten Oxid aus Silicium und aus Aluminium, z. B. vom Typ $SiOAlF_x$, basieren.

**11.** Substrat nach einem der vorhergehenden Ansprüche, wobei das Substrat aus Glas ist, klar oder durchgefärbt.

**12.** Substrat nach einem der vorhergehenden Ansprüche, wobei die dritte Schicht mit hohem Index aus einem gemischten Oxid aus Zinn/Zink oder Siliciumtitan besteht oder dieses umfasst.

**13.** Substrat nach einem der vorhergehenden Ansprüche, wobei die dritte Schicht mit hohem Index aus einem Siliciumnitrid besteht oder dieses umfasst.

**14.** Substrat nach einem beliebigen der vorhergehenden Ansprüche, ausgestattet auf seinen zwei Seiten mit der Stapelung von Antireflex-Schichten.

**15.** Substrat nach einem beliebigen der vorhergehenden Ansprüche, ausgestattet auf einer seinen Seiten mit der Stapelung von Antireflex-Schichten und ausgestattet auf der anderen Seite mit einer Beschichtung die eine andere Funktion hat, vom Typ Sonnenschutz, mit niedrigem Energieverlust, Schmutzschutz, Antibeschlag, Regenschutz, Heizbeschichtung.

**16.** Mehrfachverglasung, insbesondere doppelt oder mit Verbundstruktur, umfassend mindestens zwei Substrate nach einem beliebigen der vorhergehenden Ansprüche, wobei die zwei Glassubstrate durch eine Zwischen-Gasfüllung getrennt oder mit Hilfe einer Folie aus thermoplastischem Material assoziiert sind, wobei eines der Substrate auf seiner Außenseite, d. h. auf der Seite, die auf die Gegenseite der thermoplastischen Folie oder der Gasfüllung gedreht ist, mit der Antireflex-Stapelung ausgestattet ist, und wobei das andere Substrat auf seiner Außenseite mit einer Antireflex-Stapelung der gleichen oder verschiedener Art beschichtet ist, oder mit einer Beschichtung bedeckt ist, die eine andere Funktion hat, vom Typ Sonnenschutz, mit niedrigem Energieverlust, Schmutzschutz, Antibeschlag, Regenschutz, Heizgbeschichtungund/oder wobei die Beschichtung eine andere Funktion hat, auf einer der Seiten der Substrate angeordnet ist ,die hin zur thermoplastischen Montagefolie oder hin zur Gasfüllung gedreht sind.

**17.** Anwendung des Substrats nach einem der Ansprüche 1 bis 15 oder der Mehrfachverglasung nach Anspruch 16 als Innen- oder Außenverglasung für das Gebäude, als Präsentationsmöbel, Ladentheke, insbesondere in Form eines gebogenen Glases, als Blendschutz-Computerbildschirm oder als Glasmöbel.

**Claims**

**1.** A transparent substrate (6), especially a glass substrate, comprising an antireflection coating made of a thin-film multilayer (A) of dielectric material with alternately high and low refractive indices, **characterized in that** the multilayer successively comprises, starting from the surface of the substrate:

- a high-index first layer (1) having a refractive index $n_1$ of between 1.8 and 2.3 and a geometrical thickness $e_1$ of between 10 and 25 nm;
- a low-index second layer (2) having a refractive index $n_2$ of between 1.40 and 1.55 and a geometrical thickness $e_2$ of between 20 and 50 nm;
- a high-index third layer (3) having a refractive index $n_3$ of between 1.8 and 2.3 and a geometrical thickness $e_3$ of between 110 and 150 nm; and
- a low-index fourth layer (4) having a refractive index $n_4$ of between 1.40 and 1.55 and a geometrical thickness $e_4$ of between 60 and 95 nm,

the algebraic sum of the geometrical thicknesses $e_3 + e_1$ being between 125 and 160 nm, **in that** said multilayer (A) does not have a Zr dopant and **in that** said multilayer is present on at least one of the faces of said substrate, the other face being covered with another coating having another functionality, for example of the solar-protection, antistatic, heating layer, anti-fogging, anti-rain or anti-soiling type, or else covered with another antireflection multilayer (A) as described previously.

2. The substrate as claimed in claim 1, in which $n_1$ and $n_3$ are less than 2.2 and preferably between 1.85 and 2.15, or even between 1.90 and 2.10.

3. The substrate as claimed in one of the preceding claims, in which $e_1$ is between 12 and 20 nm.

4. The substrate as claimed in one of the preceding claims, in which $e_2$ is between 25 and 40 nm, preferably between 30 and 40 nm.

5. The substrate as claimed in one of the preceding claims, in which $e_3$ is between 115 and 135 nm.

6. The substrate as claimed in one of the preceding claims, in which $e_4$ is between 75 and 95 nm.

7. The substrate as claimed in one of the preceding claims, in which the algebraic sum of the geometrical thicknesses $e_3 + e_1$ is between 130 and 155 nm.

8. The substrate as claimed in one of the preceding claims, in which the high-index first layer (1) and/or the high-index third layer (3) are based on metal oxide (s) chosen from zinc oxide, tin oxide and zirconium oxide or based on nitride(s) chosen from silicon nitride and/or aluminum nitride or based on mixed tin/zinc oxides ($Sn_xZn_yO_z$), or on mixed zinc/titanium oxides ($TiZnO_x$), or based on mixed silicon/titanium oxides ($Si_xTi_yO_z$).

9. The substrate as claimed in one of the preceding claims, in which the high-index first layer (1) and/or the high-index third layer (3) are formed from a superposition of several high-index layers, especially a superposition of two layers such as $SnO_2/Si_3N_4$ or $Si_3N_4/SnO_2$.

10. The substrate as claimed in one of the preceding claims, in which the low-index second layer (2) and/or the low-index fourth layer (4) are based on silicon oxide, on silicon oxynitride and/or oxycarbide or on a mixed oxide of silicon and aluminum, for example of the $SiOAlF_x$ type.

11. The substrate as claimed in one of the preceding claims, in which said substrate is made of clear or bulk-tinted glass.

12. The substrate as claimed in one of the preceding claims, in which the high-index third layer is made from or comprises a mixed tin/zinc or silicon/titanium oxide.

13. The substrate as claimed in one of the preceding claims, in which the high-index third layer is made from or comprises a silicon nitride.

14. The substrate as claimed in any one of the preceding claims, equipped on both of its faces with said antireflection multilayer stack.

15. The substrate as claimed in any one of the preceding claims, equipped on one of its faces with said antireflection multilayer stack and equipped on the other face with a coating having another functionality of the solar-protection, low-emissivity, anti-soiling, anti-fogging, anti-rain or heating type.

16. A multiple glazing unit, especially a double glazing unit or a glazing unit with a laminated structure, comprising at least two substrates as claimed in any one of the preceding claims, in which the two glass substrates are separated by an intermediate gas-filled space or joined together using a thermoplastic sheet, in which one of said substrates is equipped on its outer face, that is to say on the face on the opposite side from the thermoplastic sheet or from the gas-filled space, with said antireflection multilayer, and in which the other substrate, on its outer face is coated with an antireflection multilayer of the same or different nature, or is coated with a coating having another functionality of the solar-protection, low-emissivity, anti-soiling, anti-fogging, anti-rain or heating type, and/or in which said coating having another functionality is placed on one of the faces of the substrates turned toward the thermoplastic joining sheet or toward the gas-filled space.

17. An application of the substrate as claimed in one of claims 1 to 15 or of the multiple glazing unit as claimed in claim 16 as interior or exterior glazing for buildings, as display cabinets, as counters in stores, especially in the form of curved glass, as anti-glare computer screens or as glass furniture.

*Fig. 1*

*Fig. 2*

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0728712 A
- WO 9743224 A
- EP 0515847 A
- WO 2004005210 A
- WO 2005016842 A
- EP 791562 A
- EP 616883 A
- WO 9414716 A
- WO 9600194 A
- EP 0644164 A
- WO 9628394 A
- WO 04005210 A
- FR 2748743